# EUROPÄISCHE PATENTSCHRIFT

(11) **EP 2 236 885 B1**
(45) Veröffentlichungstag und Bekanntmachung des Hinweises auf die Patenterteilung: **16.12.2015**
(21) Anmeldenummer: 10157221.2
(22) Anmeldetag: 22.03.2010
(51) Int. Cl.: F16L 3/23

(54) **Installationsteil**
Installation part
Elément d'installation

(30) Priorität: 01.04.2009 DE 202009002018 U
(43) Veröffentlichungstag der Anmeldung: 06.10.2010
(73) Patentinhaber: OBO Bettermann GmbH & Co. KG, 58710 Menden (DE)
(72) Erfinder: Voss, Karl Josef, 58802 Balve (DE)
(74) Vertreter: Haverkamp, Jens

(56) Entgegenhaltungen:
- DE-U1- 203 169 47U

## Beschreibung

Die Erfindung betrifft ein Installationsteil zum Halten von Installationsleitungen mit zumindest einem Verbindungsabschnitt mit einer Anreihkontur zum Verbinden dieses ersten Installationsteils mit einem zweiten, einen Verbindungsabschnitt mit komplementärer Anreihkontur tragenden Installationsteil, wobei der Verbindungsabschnitt des ersten Installationsteils zumindest einen Verbinder aufweist, der als Anreihkontur entweder als weiblicher Verbinder in Form einer hinterschnittenen Nut oder als männlicher, komplementär zur Querschnittsgeometrie des weiblichen Verbinders gestalteter Verbinder ausgebildet ist.

In DE 20316947 U offenbart ein Installationsteil nach dem Oberbegriff des Anspruchs 1.

Zum Verlegen von Installationsleitungen, beispielsweise elektrischen oder sanitären Installationsleitungen, werden verschiedene Installationsteile verwendet. Bei elektrischen Installationen kann es sich beispielsweise um Kabelhalter zum individuellen Anbringen oder Halten eines einzelnen Kabels handeln. Zum Halten von mehreren elektrischen Leitungen oder auch von anderen Installationsleitungen werden, wenn diese gebündelt zu verlegen sind, auch Sammelhalterungen verwendet. Diese sind nach Art einer öffnenbaren Schelle konzipiert und fassen die zu verlegenden Leitungen nach Art eines Ringes ein. Derartige Sammelhalterungen sind üblicherweise als rechteckförmiger Ring konzipiert, dessen dem Rücken der Sammelhalterung gegenüberliegender Schenkel zum Öffnen und Schließen der Sammelhalterung als Verschlussschenkel ausgebildet ist. Dieser trägt an seinem freien Ende ein erstes Teil eines Rastverschlusses, das mit einem zu diesem ortsfest gehaltenen zweiten Teil zum Verschließen der Sammelhalterung zusammenwirkt. Derartige Sammelhalterungen werden orientiert montiert, und zwar in einer Anordnung, dass der Rastverschluss oben liegend angeordnet ist.

Eine solche Sammelhalterung ist beispielsweise in DE 195 26 446 A1 beschrieben. Diese Sammelhalterung verfügt über an ihren beiden, den Rücken mit dem Verschlussschenkel verbindenden Querstegen angeordnete Verbinder, wobei an dem oberen Quersteg ein erstes Verbindungselement und an dem unteren Quersteg ein zweites, komplementär zu dem ersten Verbindungselement ausgebildetes Verbindungselement angeordnet ist.

Das Vorsehen derartiger Verbindungselemente dient dem Zweck, mehrere gleichartige Sammelhalterungen aneinander anschließen zu können. Durch die Verbindungselemente können mehrere Sammelhalterungen zum Ausbilden einer Sammelhalterungsreihe miteinander verbunden werden. Aus diesem Grunde werden die Verbindungselemente auch als Anreihkonturen angesprochen. Bei der aus dem vorgenannten Dokument bekannt gewordenen Sammelhalterung ist die eine Anreihkontur als weiblicher Verbinder in Form einer hinterschnittenen Nut ausgeführt. Die auf dem gegenüberliegenden Quersteg angeordnete weitere Anreihkontur trägt als komplementären Verbinder einen männlichen Verbinder mit einer Querschnittsgeometrie, dass dieser in die als weiblicher Verbinder vorgesehene hinterschnittene Nut einschiebbar ist. Der männliche Verbinder ist daher im Querschnitt T-förmig konzipiert.

Derartige Sammelhalterungen verfügen zusätzlich typischerweise im Bereich ihres Rückens sowie im Bereich ihres oberen Quersteges über Mittel zum Anschließen eines Befestigungsadapters, mit dem die Sammelhalterung wand- oder deckenseitig befestigt werden kann. Derartige Befestigungsadapter werden eingesetzt, wenn eine unmittelbare Montage der Sammelhalterung an einer Wand oder einer Decke nicht gewünscht oder nicht möglich ist.

Die vorbekannten Installationsteile verfügen über komplementär ausgebildete Verbindungsabschnitte zum Verbinden von zwei Installationsteilen miteinander. Dieses macht es erforderlich, dass zum Anreihen von mehreren Installationsteilen der eine Verbinderabschnitt anders als der andere Verbindungsabschnitt ausgebildet ist. Dieses ist unproblematisch, wenn die Installationsteile, beispielsweise die Sammelhalterungen, in gleicher Orientierung zueinander aneinander angereiht werden sollen. Es besteht jedoch der Wunsch, dass Installationsteile, insbesondere Sammelhalterungen, nicht nur in der Höhe sondern auch in Querrichtung mit einfachen Mitteln miteinander verbunden werden können, so dass eine Doppelsammelhalterung ausgebildet werden kann, bei der die jeweiligen Verschlussschenkel nach außen weisen und damit zugänglich sind. Um dieses zu ermöglichen, müssen, wenn auf zusätzliche Verbinderteile verzichtet werden soll, zwei hinsichtlich der Ausgestaltung der an ihrem Rücken angeordneten Verbinder komplementäre Sammelhalterung hergestellt werden.

Dieses erfordert einen entsprechend hohen Aufwand bei der Herstellung derartiger Installationsteile, da zwei hinsichtlich der Ausgestaltung ihrer Anreihkonturen unterschiedliche komplementär zueinander ausgebildete Sammelhalterungen bereitgestellt werden müssen. Dieses ist auch für die Handhabung derartiger Installationsteile, beispielsweise derartiger Sammelhalterungen umständlich.

Ausgehend von diesem diskutierten Stand der Technik liegt der Erfindung daher die Aufgabe zugrunde, ein Installationsteil, beispielsweise ausgebildet als Sammelhalterung für Installationsleitungen der eingangs genannten Art dergestalt weiterzubilden, dass die zum Stand der Technik aufgezeigten Nachteile bei einer Verbindung von zwei Installationsteilen mit gleichen, zueinander weisenden Seiten, wie etwa bei einer vorstehend aufgezeigten Rücken-an-Rücken-Verbindung von Sammelhalterungen vermieden sind.

Gelöst wird diese Aufgabe erfindungsgemäß durch ein eingangs genanntes, gattungsgemäßes Installationsteil, bei dem der Verbindungsabschnitt des Installationsteils wenigstens zwei, durch jeweils eine quer zur Fügerichtung verlaufende Einsetznut voneinander beabstandete Anreihkonturabschnitte aufweist, wobei in dem einen Anreihkonturabschnitt wenigstens ein weiblicher oder männlicher Verbinder und in dem durch eine Einsetznut von diesem beabstandeten Anreihkonturabschnitt ein zu diesem zumindest einen Verbinder komplementärer Verbinder angeordnet ist, wobei die lichte Weite der Einsetznut zumindest der in Fügerichtung zum Verbinden von zwei Installationsteilen weisenden Längserstreckung eines der beiden Anreihkonturabschnitte entspricht und die zueinander komplementären Verbinder zweier benachbarter Anreihkonturabschnitte in Fügerichtung miteinander fluchtend angeordnet sind.

Bei diesem Installationsteil verfügt der Verbindungsabschnitt über zwei, zueinander jeweils komplementär ausgebildete Anreihkonturabschnitte. Diese sind durch eine Einsetznut voneinander getrennt. Die Verbinder der beiden Anreihkonturabschnitte sind in Fügerichtung fluchtend zueinander angeordnet. Dieses ermöglicht die Verbindung von zwei Installationsteilen mit jeweils derselben Seite miteinander, also beispielsweise Rücken-an-Rücken, wie dieses bei einer Sammelhalterung gewünscht ist. Da jeder Verbindungsabschnitt über die beiden komplementär zueinander ausgebildeten Anreihkonturen, angeordnet in jeweils einem Anreihkonturabschnitt, verfügt, werden in einer solchen Anordnung jeweils komplementäre Anreihkonturen bzw. die komplementär ausgebildeten Anreihkonturabschnitte miteinander in Eingriff gestellt. Dabei dient die Einsetznut zur Aufnahme des einen Anreihkonturabschnitts des Verbindungsabschnittes des mit einem ersten Installationsteil zu verbindenden weiteren Installationsteils. Der andere Anreihkonturabschnitt des weiteren Installationsteils befindet sich sodann benachbart zur von der Einsetznut wegweisenden Seite eines Anreihkonturabschnittes des ersten Installationsteils. Durch Verschieben der beiden dergestalt zueinander positionierten Installationsteile gegeneinander in Fügerichtung, werden die jeweils komplementär ausgebildeten Anreihkonturen der Anreihkonturabschnitte der beiden Installationsteile miteinander in Eingriff gestellt und damit die beiden Installationsteile formschlüssig miteinander verbunden. Durch die Möglichkeit des Verbindens von Installationsteilen mit jeweils der gleichen Seite miteinander können etwa zur Ausbildung einer Doppelsammelhalterung zwei identische Sammelhalterungen miteinander verbunden werden, ohne dass zusätzliche Verbindungsteile verwendet werden müssten.

Vorzugsweise besteht jeder Anreihkonturabschnitt aus einer Wechselfolge von mehreren weiblichen und mehreren männlichen Verbindern. Gemäß einem bevorzugten Ausführungsbeispiel gehen diese unmittelbar ineinander über, wobei die einen weiblichen Verbinder bildenden Stege die männlichen Verbinder sind. Diese Stege sind vorzugsweise als Pilzkopfstege ausgeführt, wodurch die weiblichen Verbinder ihren Hinterschnitt erhalten und die in den hinterschnittenen Bereich der weiblichen Verbinder eines komplementären Anreihabschnittes eingreifenden Abschnitte der männlichen Verbinder gebildet sind.

In einer Weiterbildung ist vorgesehen, dass die die zwei Anreihabschnitte eines Verbindungsabschnittes trennende Einsetznut sich in eine ebenfalls hinterschnitte Adapternut fortsetzt, um darin den Fuß eines Befestigungsadapters zum beispielsweise wand- oder deckenseitige Montieren des Installationsteils, welches beispielsweise als Sammelhalterung ausgebildet sein kann, einsetzen zu können. Es versteht sich, dass bei Nutzung der Einsetznut in diesem Sinne der Verbindungsabschnitt nicht mehr zum Anschließen eines weiteren Installationsteils genutzt werden kann. Daher kommt der Einsetznut bei einer solchen Ausgestaltung eines Installationsteils eine mehrfache Funktion zu, wodurch die Funktionalität des Installationsteils erhöht ist.

Ein solches Installationsteil kann mehrere derartige Verbindungsabschnitte aufweisen, insbesondere auch an unterschiedlichen Seiten. Dieses ermöglicht den Einsatz eines solchen Installationsteils als Modul im Rahmen eines verschiedene Installationsteile beinhaltenden Montagesystems. Beispielsweise kann eine Sammelhalterung mit einer größeren Höhe und einem dementsprechend längeren Rückenschenkel mit Abstand zueinander mehrere Verbindungsabschnitte aufweisen. An diese kann eine Sammelhalterung gleicher Größe angeschlossen werden. Bei einer solchen Ausgestaltung dienen die mehreren, voneinander beabstandeten Verbindungsabschnitte zum Herstellen einer Mehrpunktverbindung. Gleichfalls ist es möglich, an jeden Verbindungsabschnitt eine kleinere Sammelhalterung oder auch ein anderes Installationsteil anzubringen, wobei bei einer solchen Ausgestaltung eine Verbindung zwischen zwei Installationsteilen jeweils nur mittels jeweils eines Verbindungsabschnittes erfolgt.

Ein solches Installationsteil, beispielsweise ausgebildet als Sammelhalterung ist vorzugsweise ein im Wege eines Kunststoffspritzgussverfahrens hergestelltes Kunststoffteil.

Weitere Vorteile der Erfindung ergeben sich auch aus der nachfolgenden Beschreibung eines Ausführungsbeispieles unter Bezugnahme auf die beigefügten Figuren. Es zeigen:
- **Fig. 1:**: eine perspektivische Ansicht einer Sammelhalterung als Installationsteil,
- **Fig. 2:**: eine vergrößerte perspektivische Ansicht der Sammelhalterung der Figur 1 mit Blick auf den oberen Bereich der Rückseite derselben,
- **Fig. 3:**: eine perspektivische Draufsicht auf die Sammelhalterung der Figur 1 in einer ersten Stellung zum Anschließen derselben mit ihren Rücken an eine weitere Sammelhalterung,
- **Fig. 4:**: eine Seitenansicht der beiden zusammengefügten Sammelhalterungen der Figur 3, und
- **Fig. 5a, 5b:**: eine vergrößerte perspektivische Ansicht eines Abschnittes aus dem Rücken einer Sammelhalterung gemäß einer weiteren Ausgestaltung (Figur 5a) sowie die Sammelhalterung der Figur 5a angeschlossen an eine zweite Sammelhalterung.

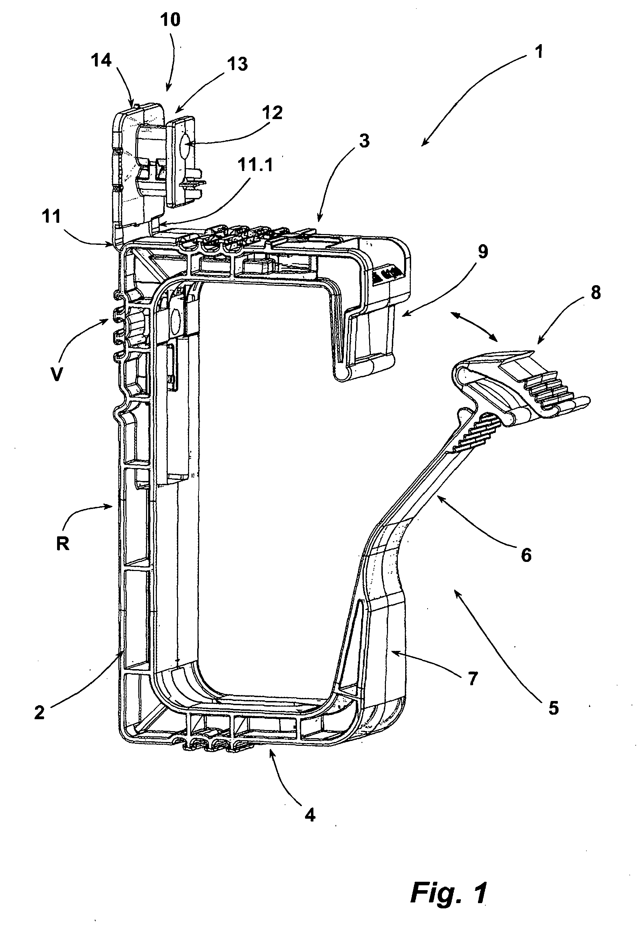

Ein als Sammelhalterung 1 ausgebildetes Installationsteil dient zum Halten von Installationsleitungen, insbesondere von elektrischen Installationsleitungen. Die Sammelhalterung 1 kann selbstverständlich auch zum Halten anderer Installationsleitungen, beispielsweise von Rohren, Datenleitungen oder dergleichen dienen. Die Sammelhalterung 1 wird zum Halten von derartigen Installationsleitungen wand- oder deckenseitig befestigt. Die Sammelhalterung ist nach Art eines öffnenbaren Ringes konzipiert. Bei dem dargestellten Ausführungsbeispiel wird die Sammelhalterung 1 durch einen etwa rechteckförmigen Körper gebildet. Dieser umfasst einen Rückenschenkel 2, einen oberen Quersteg 3, einen unteren Quersteg 4 und einen den vorderen Schenkel bildenden Verschlussschenkel 5. Der Verschlussschenkel 5 verfügt über einen Verschlussabschnitt 6, der gegenüber einem an dem unteren Quersteg 4 angeformten Schenkelteil 7 materialelastisch, wie durch den Doppelpfeil in Figur 1 angedeutet, verstellbar ist. An seinem freien Ende trägt der Verschlussschenkel 5 ein erstes Teil eines an sich bekannten Rastverschlusses, dessen komplementäres zweites Verschlussteil 9 an dem freien Ende des oberen Quersteges 3 in Richtung zum Quersteg 4 abragend angeformt ist. Figur 1 zeigt die Sammelhalterung 1 mit geöffnetem Verschlussabschnitt 6. In der Geschlossenstellung der Sammelhalterung sind die beiden Verschlussteile 8, 9 zum Schließen des Ringkörpers miteinander in Eingriff gestellt.

An den oberen Abschluss des Rückenschenkels 2 angeformt ist ein Befestigungsadapter 10, der bei dem dargestellten Ausführungsbeispiel über zwei Filmscharniere 11, 11.1 mit der Rückseite R des Rückenschenkels 2 verbunden ist. Der Befestigungsadapter dient zum wand- bzw. deckenseitigen Montieren der Sammelhalterung 1. Die Filmscharniere 11, 11.1 sind ausgebildet, damit der Befestigungsadapter 10 zwar gelenkig mit der Sammelhalterung 1 verbunden ist, gleichwohl sind die Filmscharniere 11, 11.1 hinreichend steif ausgeführt, dass der Befestigungsadapter 10 ohne Weiteres Zutun im Wesentlichen in der in Figur 1 gezeigten Stellung gegenüber der Sammelhalterung 1 verbleibt. Der Befestigungsadapter verfügt über eine diesen durchgreifende Befestigungsöffnung 12, durch die zum Montieren des Befestigungsadapters 10 an einer Wand oder einer Decke oder einem sonstigen Befestigungsgrund ein Befestiger, beispielsweise eine Schraube hindurchgeführt werden kann. Der Befestigungsadapter 10 umfasst einen Verriegelungsschuh 13, mit dem dieser in eine der Sammelhalterung zugeordnete Adapternut eingreift und darin verrastet gehalten ist. Der Befestigungsadapter 10 ist nur für den Zweck seiner Montage an dem Rückenschenkel 2 angeformt, wobei die Sammelhalterung 1 mit geschlossenem Verschlussabschnitt 6 als Handhabe zum Halten des Befestigungsadapters 10 während seiner Montage dienen kann. Ist der Adapter 10 am Befestigungsgrund festgelegt, wird dieser von der Sammelhalterung getrennt. Dabei ist vorgesehen, dass die Filmscharniere 11, 11.1 von dem Befestigungsadapter 10 abreißbar konzipiert sind, beispielsweise durch Vorsehen jeweils einer Solltrennlinie. Ein Trennen des Befestigungsadapters 10 von der Sammelhalterung 1 kann ohne weiteres durch Aufwärtsschwenken der Sammelhalterung 1 gegen den von einer befestigungsgrundseitig anliegenden Montageplatte 14 abragenden Verriegelungsschuh 13 erfolgen, bei welcher Verschwenkbewegung die Oberseite des oberen Quersteges 3 gegen den Verriegelungsschuh 13 geführt und dadurch ein zweiarmiger Hebel ausgebildet wird, an dessen kürzerem Ende die Filmscharniere 11, 11.1 und an dessen längerem Ende der als Haltegriff bei der Montage des Befestigungsadapters 10 verwendete Verschlussschenkel 5 liegt. Auf diese Weise können ohne weiteres auch höhere Kräfte zum Trennen des Befestigungsadapters 10 von der Sammelhalterung 1 aufgewendet werden.

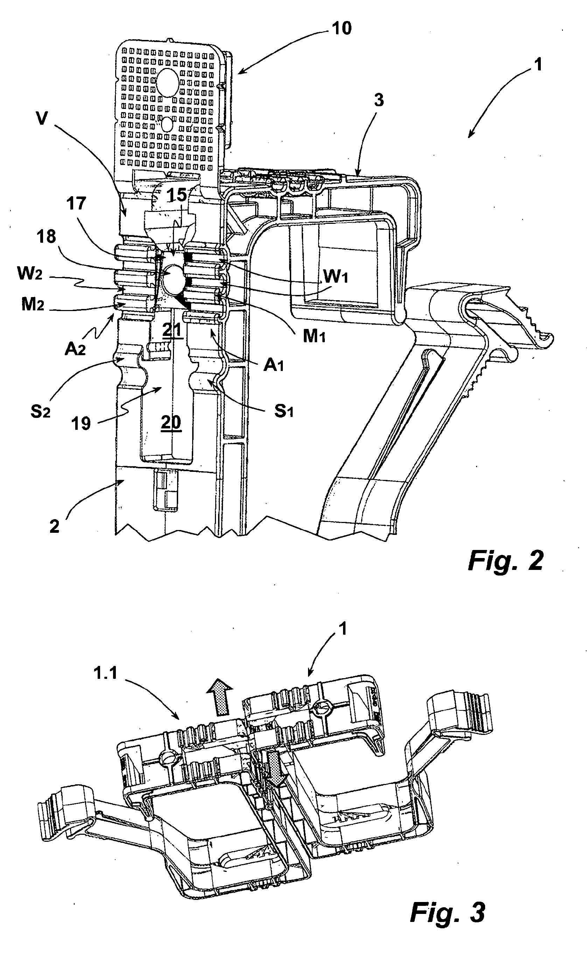

Die Sammelhalterung 1 trägt auf der Rückseite R des Rückenschenkels 2 einen Verbindungsabschnitt V, der in einer vergrößerten Ansicht auf die Rückseite R des Rückenschenkels 2 in Figur 2 erkennbar ist. Der Verbindungsabschnitt V trägt, wie nachstehend erläutert, Anreihkonturen, mit denen die Sammelhalterung 1 mit einer zweiten, identischen Sammelhalterung, verbunden werden kann. Der Verbindungsabschnitt V des dargestellten Ausführungsbeispiels besteht aus zwei Anreihkonturabschnitten A₁, A₂, die durch eine Einsetznut 15 voneinander getrennt sind. Der Anreihkonturabschnitt A₁ besteht aus einer Wechselfolge männlicher und weiblicher Verbinder, wobei sich diese Wechselfolge in Richtung der Höhe des Rückenschenkels 2 erstreckt. Die weiblichen Verbinder W₁ sind als hinterschnittene Nuten ausgeführt. Bei den männlichen Verbindern M₁ handelt es sich um Pilzkopfstege mit einer zur Ausgestaltung der weiblichen Verbinder W₁ komplementären Geometrie. Bei dem dargestellten Ausführungsbeispiel geht die Wechselfolge aus männlichen und weiblichen Verbindern M₁, W₁ unmittelbar ineinander über, so dass jeweils ein weiblicher Verbinder W₁ von zwei männlichen Verbindern M₁ eingefasst wird. Infolge der bei dem dargestellten Ausführungsbeispiel vorgesehenen Wechselfolge sind die zwischen zwei weiblichen Verbindern W₁ angeordneten männlichen Verbinder M₁ zum Ausbilden jeweils eines dem benachbarten weiblichen Verbinder W₁ zugeordneten Hinterschnittes T- bzw. pilzkopfförmig ausgeführt. Die Längserstreckung der Verbinder M₁, W₁ erfolgt quer zur Längserstreckung des Rückenschenkels 2. Der Anreihkonturabschnitt A₂ ist ebenso aufgebaut wie der Anreihkonturabschnitt A₁ aus einer Wechselfolge von weiblichen und männlichen Verbindern W₂, M₂. Dabei sind die Verbinder M₂, W₂ des Anreihkonturabschnittes A₂ bezüglich ihrer Längserstreckung zu den Verbindern M₁, W₁ des Anreihkonturabschnittes A₁ versetzt und zwar dergestalt, dass mit jedem weiblichen Verbinder W₁ des Anreihkonturabschnittes A₁ ein männlicher Verbinder M₂ des Anreihkonturabschnittes A₂ fluchtet. Aufgrund der identischen Dimensionierung der weiblichen Verbinder W₂ sowie der männlichen Verbinder M₂ im Anreihkonturabschnitt A₂ mit den Verbindern M₁, W₁ des Anreihkonturabschnittes A₁ fluchten dementsprechend die weiblichen Verbinder W₂ des Anreihkonturabschnittes A₂ mit den männlichen Verbindern M₁ des Anreihkonturabschnittes A₁.

Die männlichen Verbinder M₁, M₂ ragen mit ihrer halben Höhe über die Oberseite 16 der Rückseite R des Rückenschenkels 2 ab. Mit Abstand zu dem jeweils zuunterst angeordneten Verbinder der Anreihkonturabschnitte A₁, A₂ befindet sich jeweils ein Stützwulst S₁, S₂, deren von der Oberfläche 16 abragende Höhe demjenigen Betrag entspricht, mit dem die männlichen Verbinder M₁, M₂ ebenfalls von der Oberfläche 6 abragen. Benachbart zu den Stützwülsten S₁, S₂ ist jeweils versetzt zueinander eine Wulstaufnahme vorgesehen.

Bei dem dargestellten Ausführungsbeispiel ist die Längserstreckung der Verbinder M₁, W₁, M₂, W₂ der beiden Anreihkonturabschnitte A₁, A₂ gleich. Die lichte Weite der Einsetznut 15 entspricht bei dem dargestellten Ausführungsbeispiel der Länge der Verbinder zuzüglich eines gewissen Bewegungsspiels.

Bei dem dargestellten Ausführungsbeispiel ist in die die Anreihkonturabschnitte A₁, A₂ trennende Einsetznut 15 ein Steg 17 eingesetzt. Dieser dient bei einer Montage von zwei Sammelhalterungen in einer Rücken-an-Rücken-Anordnung als Montagehilfe, da die Oberseite des Steges 17 mit den Tiefsten der weiblichen Verbinder W₁, W₂ der angrenzenden Anreihkonturabschnitte A₁, A₂ fluchtet und diese Oberseite daher als Anlagefläche dient, auf der die Oberseiten eines männlichen Verbinders M₁, M₂ eines Anreihkonturabschnittes einer weiteren Sammelhalterung anliegen. Bei dem dargestellten Ausführungsbeispiel ist in den Steg 17 eine Befestigungsöffnung 18 eingebracht, mit der die Sammelhalterung 1 auch ohne Verwendung des Befestigungsadapters 10 an einem Befestigungsgrund montiert werden kann.

Unterhalb des Steges 17 setzt sich die Einsetznut 13 fort in eine Befestigungsnut 19 zur Aufnahme des Verriegelungsschuhs 13 des Befestigungsadapters 10. Zu diesem Zweck verfügt die Befestigungsnut 19 über einen größeren Einsetzabschnitt 20 und einen schmaleren Verriegelungsabschnitt 21, wobei der Verriegelungsabschnitt 21 der Befestigungsnut 19 zum formschlüssigen Halten des Befestigungsadapters 10 hinterschnitten ist. Für diesen bildet die Unterseite des Steges 17 einen Anschlag.

Zum Verbinden der Sammelhalterung 1 mit einer weiteren, identischen Sammelhalterung in einer Rücken-an-Rücken-Anordnung zueinander werden die beiden Sammelhalterungen 1, 1.1, wie aus Figur 3 ersichtlich mit ihren Rücken aneinandergrenzend versetzt zueinander angeordnet, so dass jeweils ein Anreihkonturabschnitt der einen Sammelhalterung in die Einsetznut 15 der anderen Sammelhalterung eingreift. Durch translatorisches Verschieben der beiden Sammelhalterungen 1, 1.1 gegeneinander, wie durch die Pfeile in Figur 3 angedeutet, werden die beiden Sammelhalterungen 1, 1.1 zusammengefügt. Bei diesem Fügevorgang werden die miteinander in einer fluchtenden Anordnung befindlichen Verbinder miteinander in Eingriff gestellt, mithin die männlichen Verbinder der beiden Anreihkonturabschnitte in die weiblichen Verbinder eingeschoben.

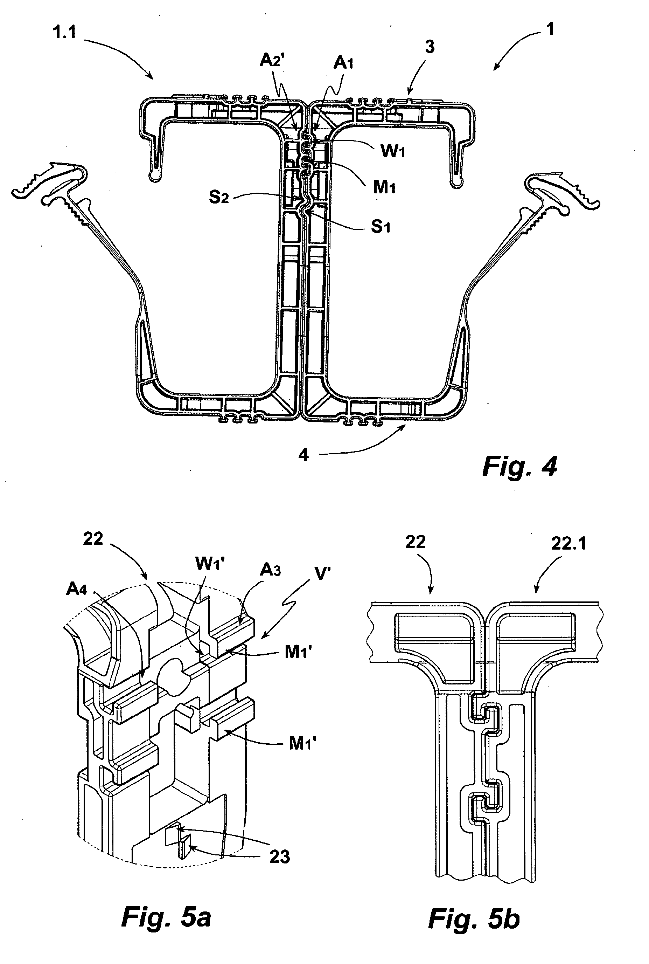

Figur 4 zeigt die beiden miteinander verbundenen Sammelhalterungen 1, 1.1 in einer Seitenansicht. Aus dieser wird erkennbar, dass in jeweils einen weiblichen Verbinder W₁ des in dieser Darstellung sichtbaren Anreihkonturabschnittes A₁ jeweils ein männlicher Verbinder des Anreihkonturabschnitts A₂' der Sammelhalterung 1.1 und jeder männliche Verbinder M₁ der Sammelhalterung 1 in einen weiblichen Verbinder des komplementären Anreihkonturabschnitts A₂' der anderen Sammelhalterung 1.1 eingreift. Infolge der entsprechend versetzten Anordnung der Stützwülste S₁, S₂ greifen diese in die jeweils benachbarte Wulstaufnahme ein. Die beiden Sammelhalterungen 1, 1.1 sind somit ohne zusätzliche Verbindungselemente formschlüssig miteinander zur Ausbildung einer Doppelsammelhalterung miteinander verbunden, bei welcher Anordnung die jeweiligen Verschlussschenkel nach außen weisend angeordnet sind. Eine solche Doppelsammelhalterung kann über ein oder auch zwei Befestigungsadapter, wie vorbeschrieben, deckenseitig montiert werden.

Die Sammelhalterung 1 verfügt an der Außenseite ihres oberen Quersteges 3 sowie an der Außenseite des unteren Quersteges 4 über weitere Anreihkonturen, wobei diese nach herkömmlicher Art ausgebildet sind, um die Sammelhalterung 1 ebenfalls in horizontaler Richtung mit ein oder mehreren weiteren Sammelhalterungen zum Ausbilden einer Sammelhalterungsreihe zu verbinden.

Figur 5a zeigt in einem Ausschnitt den Verbindungsabschnitt V' einer weiteren Sammelhalterung 22. Diese ist prinzipiell aufgebaut wie die Sammelhalterung 1 und unterscheidet von dieser lediglich hinsichtlich der Ausbildung der Verbinder ihrer beiden Anreihkonturabschnitte A₃, A₄. Im Unterschied zu der Anordnung der Verbinder der Anreihkonturabschnitte A₁, A₂ der Sammelhalterung 1 verfügt jeder Anreihkonturabschnitt A₃, A₄ über zwei voneinander beabstandete Verbinderanordnungen. Jede Verbinderanordnung umfasst einen männlichen Verbinder M₁', durch den ein weiblicher Verbinder W₁' eingefasst ist. Die männlichen Verbinder M₁' sind zum Ausbilden der gewünschten hinterschnittenen Nut der weiblichen Verbinder W₁' nach Art einer Klaue ausgebildet. Die Verbinder des zweiten Anreihkonturabschnittes A₄ sind komplementär ausgestaltet.

Figur 5b zeigt die an eine identische Sammelhalterung 22.1 angeschlossene Sammelhalterung 22 in einer Rücken-an-Rücken-Anordnung mit den in Eingriff gestellten Verbindern der jeweils komplementären Anreihkonturabschnitte. Zum Fixieren der beiden Sammelhalterungen 22, 22.1 in ihrer in Figur 5b gezeigten Zusammenstellung dienen Rastvorsprünge 23, die an die Rückenseite des Rückenschenkels der Sammelhalterungen 22, 22.1 angeformt sind. In der in Figur 5b gezeigten miteinander verbundenen Stellung wird jeder Rastvorsprung 23 der einen Sammelhalterung von einem Rastvorsprung der anderen Sammelhalterung hintergriffen. Zum erleichterten Zusammenfügen der beiden Sammelhalterungen 22, 22.1 ist die Querschnittsgeometrie der Rastvorsprünge 23 unsymmetrisch mit einer flachen Fügeflanke und mit einer steileren Verriegelungsflanke vorgesehen.

Rastvorsprünge wie zu den Sammelhalterungen 22, 22.1 erläutert, können ebenfalls auf der Rückseite R des Rückenschenkels 2 der Sammelhalterungen 1, 1.1 angeordnet sein.

Die in den beschriebenen Ausführungsbeispielen dargestellten, als Sammelhalterungen ausgebildete Installationsteile sind im Wege eines Kunststoffspritzprozesses hergestellt worden. Damit handelt es sich bei den beschriebenen Sammelhalterungen um Kunststoffteile.

Die Erfindung ist vorstehend anhand eines Ausführungsbeispiels beschrieben worden. Ohne den Umfang der Ansprüche zu verlassen, ergeben sich für einen Fachmann zahlreiche weitere Ausgestaltungen, die Erfindung zu verwirklichen. So kann es sich beispielsweise anbieten, in einem Verbindungsabschnitt mehr als zwei Anreihkonturabschnitte in einer Nebeneinanderanordnung, jeweils durch eine Einsetznut getrennt, anzuordnen.

**Bezugszeichenliste**

| | |
|---|---|
| 1, 1.1 | Sammelhalterung |
| 2 | Rückenschenkel |
| 3 | Quersteg |
| 4 | Quersteg |
| 5 | Verschlussschenkel |
| 6 | Verschlussabschnitt |
| 7 | Schenkelteil |
| 8 | Rastverschlussteil |
| 9 | Verschlussteil |
| 10 | Befestigungsadapter |
| 11, 11.1 | Filmscharnier |
| 12 | Befestigungsöffnung |
| 13 | Verriegelungsschuh |
| 14 | Montageplatte |
| 15 | Einsetznut |
| 16 | Oberfläche |
| 17 | Steg |
| 18 | Befestigungsöffnung |
| 19 | Befestigungsnut |
| 20 | Einsetzabschnitt |
| 21 | Verriegelungsabschnitt |
| 22, 22.1 | Sammelhalterung |
| 23 | Rastvorsprung |
| | |
| A₁, A₂ | Anreihkonturabschnitt |
| A₁', A₂' | Anreihkonturabschnitt |
| A₃, A₄ | Anreihkonturabschnitt |
| M₁, M₂, M₁' | männlicher Verbinder |
| W₁, W₂, W₁' | weiblicher Verbinder |
| R | Rückseite |
| S₁, S₂ | Stützwulst |
| V, V' | Verbindungsabschnitt |

## Patentansprüche

1. Installationsteil zum Halten von Installationsleitungen mit zumindest einem Verbindungsabschnitt (V, V') mit einer Anreihkontur (A₁, A₂; A₃, A₄) zum Verbinden dieses ersten Installationsteils (1, 22) mit einem zweiten, einen Verbindungsabschnitt mit komplementärer Anreihkontur (A₁', A₂') tragenden Installationsteil (1.1, 22.1), wobei der Verbindungsabschnitt (V, V') des ersten Installationsteils (1, 22) zumindest einen Verbinder (W₁) aufweist, der als Anreihkontur entweder als weiblicher Verbinder in Form einer hinterschnittenen Nut oder als männlicher, komplementär zur Querschnittsgeometrie des weiblichen Verbinders (M₁) gestalteter Verbinder ausgebildet ist, **dadurch gekennzeichnet, dass** der Verbindungsabschnitt (V, V') des Installationsteils (1, 22) wenigstens zwei, durch jeweils eine quer zur Fügerichtung verlaufende Einsetznut (15) voneinander beabstandete Anreihkonturabschnitte (A₁, A₂; A₃, A₄) aufweist, wobei in dem einen Anreihkonturabschnitt (A₁, A₃) wenigstens ein weiblicher oder männlicher Verbinder und in dem durch eine Einsetznut (15) von diesem beabstandeten Anreihkonturabschnitt (A₂, A₄) ein zu diesem zumindest einen Verbinder komplementärer Verbinder angeordnet ist, wobei die lichte Weite der Einsetznut (15) zumindest der in Fügerichtung zum Verbinden von zwei Installationsteilen (1, 1.1; 22, 22.1) weisenden Längserstreckung eines der beiden Anreihkonturabschnitte (A₁, A₂; A₃, A₄) entspricht und die zueinander komplementären Verbinder (M₁, W₂; W₁, M₂) zweier benachbarter Anreihkonturabschnitte (A₁, A₂; A₃, A₄) in Fügerichtung miteinander fluchtend angeordnet sind.

2. Installationsteil nach Anspruch 1, **dadurch gekennzeichnet, dass** jeder Anreihkonturabschnitt (A₁, A₂; A₃, A₄) aus einer Wechselfolge von einem oder mehreren weiblichen und männlichen Verbindern (M₁, W₁; M₂, W₂) aufgebaut ist.

3. Installationsteil nach Anspruch 2, **dadurch gekennzeichnet, dass** die komplementären Verbinder der Anreihkonturabschnitte (A₁, A₂) unmittelbar ineinander übergehen und die einen weiblichen Verbinder (W₁, W₂) bildenden Stege die männlichen Verbinder (M₁, M₂) sind.

4. Installationsteil nach Anspruch 3, **dadurch gekennzeichnet, dass** die männlichen Verbinder (M₁, M₂) als Pilzkopfstege ausgeführt sind.

5. Installationsteil nach einem der Ansprüche 1 bis 4, **dadurch gekennzeichnet, dass** die männlichen Verbinder (M₁, M₂) mit ihrem äußeren Abschluss mit ihrer halben Höhe von der Oberfläche (16) der an den Verbindungsabschnitt grenzenden Bereiche des Installationsteils (1) abragen.

6. Installationsteil nach einem der Ansprüche 1 bis 5, **dadurch gekennzeichnet, dass** die Einsetznut (15) zum Halten des Verriegelungsschuhs (13) eines Befestigungsadapters (10) hinterschnitten und entgegen der vorgesehenen Lastaufnahmerichtung durch einen Anschlag (17) für den Befestigungsadapter (10) begrenzt ist.

7. Installationsteil nach Anspruch 6, **dadurch gekennzeichnet, dass** zumindest eine der beiden zueinander weisenden Wände der Einsetznut (15) wenigstens ein erstes Rastelement zum Verriegeln des darin eingesetzten, zumindest ein an komplementärer Stelle angeordnetes komplementäres zweites Rastelement aufweisenden Befestigungsfußes eines Befestigungsadapters in seiner an dem Anschlag anliegenden Anordnung trägt.

8. Installationsteil nach einem der Ansprüche 1 bis 7, **dadurch gekennzeichnet, dass** das Installationsteil eine Sammelhalterung (1, 1.1; 22, 22.1) für Installationsleitungen, insbesondere elektrische Installationsleitungen ist.

9. Installationsteil nach Anspruch 8, **dadurch gekennzeichnet, dass** zumindest ein Verbindungsabschnitt (V, V') an der Rückseite (R) des Rückenschenkels (2) der Sammelhalterung (1, 1.2; 22, 22.1) angeordnet ist.

## Claims

1. Installation part for the retaining of installation lines with at least one connecting section (V, V') with an alignment contour (A₁, A₂, A₃, A₄) for connecting this first installation part (1, 22) to a second installation part (1.1, 22.1) carrying a connecting section with complementary alignment contours (A₁', A₂'), wherein the connecting section (V, V') of the first installation part (1, 22) comprises at least one connector (W₁), which is formed as an alignment contour either as a female link in the form of a back-cut groove or as a male link formed as complementary to the cross-section geometry of the female link (M₁), **characterised in that** the connecting section (V, V') of the installation part (1, 22) comprises at least two alignment contour sections (A₁, A₂, A₃, A₄) separated from one another in each case by an insertion groove (15) running transverse to the joint direction, wherein, arranged in the one alignment contour section (A₁, A₃), is at least one female or male connector, and, in the alignment contour section (A₂, A₄), spaced apart from this by an insertion groove (15) is a connector which is complementary to this at least one connector, wherein the clear width of the insertion groove (15) corresponds at least to the longitudinal extension pointing in the joint direction for the connection of two installation parts (1, 1.1; 22, 22.1) of one of the two alignment contour sections (A₁, A₂, A₃, A₄), and the mutually complementary connectors (M₁, W₂; W₁, M₂) of two adjacent alignment contour sections (A₁, A₂, A₃, A₄) are arranged flush with one another in the joint direction.

2. Installation part according to claim 1, **characterised in that** each alignment contour section (A₁, A₂, A₃, A₄) is formed from an alternating sequence of one or more female and male connectors (M₁, W₂; W₁, M₂).

3. Installation part according to claim 2, **characterised in that** the complementary connectors of the alignment contour sections (A₁, A₂) transfer directly to one another and the webs forming a female connector (W₁, W₂) are the male connectors (M₁, M₂).

4. Installation part according to claim 3, **characterised in that** the male connectors (M₁, M₂) are designed as mushroom-head webs.

5. Installation part according to any one of claims 1 to 4, **characterised in that** the male connectors (M₁, M₂) project with their outer end, by half their height, from the surface (16) of the regions of the installation part (1) delimiting the connecting section.

6. Installation part according to any one of claims 1 to 5, **characterised in that** the insertion groove (15) is back-cut in order to hold the locking shoe (13) of a securing adapter (10), and is delimited against the load accommodation direction provided for by means of a stop (17) for the securing adapter (10).

7. Installation part according to claim 6, **characterised in that** at least one of the two mutually facing walls of the insertion groove (15) carries at least one first latching engagement element for locking the securing foot of a securing adapter in its arrangement in contact at the stop, said securing foot comprising at least one second complementary latch engagement element arranged at a complementary position.

8. Installation part according to any one of claims 1 to 7, **characterised in that** the installation part is a collective mounting (1, 1.1; 22, 22.1) for installation lines, in particular electrical installation lines

9. Installation part according to claim 8, **characterised in that** at least one connection section (V, V') is arranged at the rear side (R) of the back limb (2) of the collective mounting (1, 1.1; 22, 22.1).

## Revendications

1. Élément d'installation destiné à maintenir des lignes d'installation comprenant au moins un tronçon de liaison (V, V') doté d'un contour d'alignement (A₁, A₂ ; A₃, A₄) destiné à relier ce premier élément d'installation (1, 22) avec un second élément d'installation (1.1, 22.1) supportant un tronçon de liaison doté d'un contour d'alignement (A₁, A₂') de forme complémentaire, le tronçon de liaison (V, V') du premier élément d'installation (1, 22) présentant au moins un élément de liaison (W₁) qui, au niveau de son contour d'alignement est conformé soit en tant qu'élément de liaison femelle, sous la forme d'une rainure contre-découpée, soit en tant qu'élément de liaison mâle, conçu avec une géométrie de section transversale complémentaire à l'élément de liaison femelle (M₁) **caractérisé en ce que** le tronçon de liaison (V, V') de l'élément d'installation (1, 22) présente au moins deux tronçons à contour d'alignement (A₁, A₂ ; A₃, A₄) espacés l'un de l'autre par une rainure d'engagement (15) qui s'étend perpendiculairement au sens du joint, au moins un élément de liaison femelle ou mâle étant disposé sur l'un des tronçons à contour d'alignement (A₁, A₃) et un élément de liaison complémentaire à cet au moins un élément de liaison étant disposé sur le tronçon à contour d'alignement (A₂, A₄) espacé du précédent par une rainure d'engagement (15), la largeur hors-tout de la rainure d'engagement (15) correspondant au moins à l'étendue longitudinale, laquelle est orientée dans le sens du joint afin de relier deux éléments d'installation (1, 1.1 ; 22, 22.1), de l'un des deux tronçons à contour d'alignement (A₁, A₂ ; A₃, A₄) et les éléments de liaison (M₁, W₂ ; W₁, M₂), complémentaires l'un par rapport à l'autre, de deux tronçons à contours d'alignement (A₁, A₂ ; A₃, A₄) voisins étant disposés de manière alignée l'un avec l'autre dans le sens du joint.

2. Élément d'installation selon la revendication 1, **caractérisé en ce que** chaque tronçon à contour d'alignement (A₁, A₂ ; A₃, A₄) est construit à partir d'une succession alternée d'un ou de plusieurs éléments de liaison femelles et mâles (M₁, W₁ ; W₂, M₂).

3. Élément d'installation selon la revendication 2, **caractérisé en ce que** les éléments de liaison complémentaires du tronçon à contour d'alignement (A₁, A₂) se suivent et s'imbriquent directement et que les montants formant un élément de liaison (W₁, W₂) femelle sont les éléments de liaison (M₁, M₂) mâles.

4. Élément d'installation selon la revendication 3, **caractérisé en ce que** les éléments de liaison (M₁, M₂) mâles sont conformés en montants à tête de champignon.

5. Élément d'installation selon l'une des revendications 1 à 4, **caractérisé en ce que** les éléments de liaison (M₁, M₂) mâles sont, par leur terminaison extérieure, en saillie de la moitié de leur hauteur par rapport à la surface (16) des zones de l'élément d'installation (1) contiguës au tronçon de liaison.

6. Élément d'installation selon l'une des revendications 1 à 5, **caractérisé en ce que** la rainure d'engagement (15) est contre-découpée afin de maintenir le sabot de verrouillage (13) d'un adaptateur de fixation (10) et qu'elle est limitée par une butée (17) pour l'adaptateur de fixation (10) dans le sens contraire à celui prévu pour supporter la charge.

7. Élément d'installation selon la revendication 6, **caractérisé en ce que** au moins une des deux parois se faisant face de la rainure d'engagement (15) supporte, dans sa disposition contiguë à la butée, au moins un premier élément d'encliquetage destiné à verrouiller le sabot de verrouillage d'un adaptateur de fixation qui y sera engagé, lequel sabot présentera au moins un second élément d'encliquetage complémentaire disposé dans la zone complémentaire.

8. Élément d'installation selon l'une des revendications 1 à 7, **caractérisé en ce que** l'élément d'installation est une fixation collective (1, 1.1 ; 22, 22.1) destinée aux lignes d'installation, notamment aux lignes d'installations électriques.

9. Élément d'installation selon la revendication 8, **caractérisé en ce que** au moins un tronçon de liaison (V, V') est disposé au dos (R) de la patte arrière (2) de la fixation collective (1, 1.2 ; 22, 22.1).
